**Europäisches Patentamt**

**European Patent Office**

**Office européen des brevets**

(19)

(11) Veröffentlichungsnummer : **0 244 609 B1**

# (12) EUROPÄISCHE PATENTSCHRIFT

(45) Veröffentlichungstag der Patentschrift :
**19.06.91 Patentblatt 91/25**

(51) Int. Cl.⁵ : **A01K 9/00,** A01K 5/02

(21) Anmeldenummer : **87104152.1**

(22) Anmeldetag : **20.03.87**

(54) Einrichtung zur Versorgung von Tieren mit einem flüssigen Futtermittel.

(30) Priorität : **24.04.86 DE 3613887**

(43) Veröffentlichungstag der Anmeldung :
**11.11.87 Patentblatt 87/46**

(45) Bekanntmachung des Hinweises auf die
Patenterteilung :
**19.06.91 Patentblatt 91/25**

(84) Benannte Vertragsstaaten :
**AT BE CH DE ES FR GB IT LI NL**

(56) Entgegenhaltungen :
**EP-A- 0 121 717
DE-A- 3 401 168
US-A- 3 037 481**

(73) Patentinhaber : **Förster, Martin, Dipl.-Ing.
Gerwigstrasse 27
W-7707 Engen (DE)**

(72) Erfinder : **Förster, Martin, Dipl.-Ing.
Gerwigstrasse 27
W-7707 Engen (DE)**

(74) Vertreter : **Engelhardt, Guido, Dipl.-Ing.
Patentanwalt Montafonstrasse 35 Postfach
1350
W-7990 Friedrichshafen 1 (DE)**

**Beschreibung**

Die Erfindung bezieht sich auf eine Einrichtung zur Versorgung von Kälbern, Rindern oder ähnlichen Haustieren, insbesondere Jungtieren, mit einem flüssigen Futtermittel, das einem Vorratsbehältnis, vorzugsweise einem Tränkeautomaten, entnehmbar und über eine Schlauchleitung einer Saugstelle zuführbar ist.

Bei derartigen, beispielsweise durch die DE-OS 34 01 168 bekannten Einrichtungen sind die zwischen einem zentralen Vorratsbehältnis oder einem Tränkeautomaten und den Saugstellen erforderlichen Schlauchleitungen oftmals lang, so daß die Tiere, um das Futtermittel aufzusaugen, eine hohe Saugleistung zur Überwindung des Strömungswiderstandes erbringen müssen. Dadurch ermüden insbesondere Jungtiere mitunter bereits nach kurzer Zeit, eine ausreichende Versorgung dieser Tiere ist somit oftmals nicht gewährleistet und deren Wachstum wird beeinträchtigt. Außerdem ist die Reinigung der Schlauchleitungen mit Schwierigkeiten verbunden, da diese zum Entleeren und Durchspülen eines Reinigungsmittels von der Saugstelle abgenommen werden müssen.

Des weiteren ist es durch die US-PS 3,037,481 bekannt, in einer starren Verbindungsleitung zwischen einem größeren und einem kleineren Vorratsbehälter eine durch einen Elektromotor antreibbare Förderpumpe einzusetzen. Der kleinere Vorratsbehälter ist hierbei mit einem Saugnuckel versehen, außerdem wird in diesem das Futtermittel angewärmt. Die Förderpumpe dient somit lediglich dazu, das Futtermittel von dem größeren in den kleineren Vorratsbehälter umzupumpen, auch ist eine Lageveränderung der aus dem kleineren Vorratsbehälter und dem Saugnuckel bestehenden Saugstelle aufgrund der starren Verbindung zwischen den beiden Vorratsbehältern auf einfache Weise nicht zu bewerkstelligen.

Aufgabe der Erfindung ist es daher, die Einrichtung der vorgenannten Gattung in der Weise zu verbessern, daß der Strömungswiderstand einer die Saugstelle z.B. mit einem Tränkeautomaten verbindenden Schlauchleitung unabhängig von deren Länge nahezu ausgeglichen wird und von den Tieren bei der Aufnahme des Futtermittels somit nur eine geringe, gleichbleibende Saugleistung zu erbringen ist. Die Futteraufnahme soll demnach für die Tiere erleichtert werden, auch soll die Handhabung bei der Reinigung der Schlauchleitungen und bei der Inbetriebnahme der Einrichtung vereinfacht werden.

Gemäß der Erfindung wird dies dadurch erreicht, daß in die Schlauchleitung eine Förderpumpe für das Futtermittel eingesetzt ist, deren Förderleistung in Abhängigkeit von dem in der Schlauchleitung herrschenden Unterdruck steuerbar ist.

Zur Steuerung der Förderpumpe kann hierbei in einfacher Weise ein durch Unterdruck beeinflußbarer Sensor vorgesehen werden, der in die Schlauchleitung eingesetzt oder an diese anzuschließen ist und der zur Auswertung der Steuersignale mit einem der Förderpumpe zugeordneten Steuergerät in Verbindung steht.

Nach einer Ausführungsform kann der Sensor als Unterdruckschalter ausgebildet werden, in Abhängigkeit von dessen Steuersignalen die Förderpumpe ein- und ausschaltbar ist. Diese sollte in diesem Fall mit Hilfe des Steuergerätes zu Beginn eines Fütterungsvorganges taktweise antreibbar und derart steuerbar sein, daß deren Fördervolumen während einer einstellbaren Zeiteinheit in wählbaren Stufen veränderbar ist.

Zweckmäßig ist es ferner, den Druckschalter nahe der Saugstelle an die Schlauchleitung anzuschließen, wobei dieser auch in einem über dem oberen Flüssigkeitsniveau des Vorratsbehältnisses, bei einem zur Versorgung vorgesehenen Tränkeautomaten über dem oberen Flüssigkeitsniveau des Mixers, verlaufenden Bereich an die Schlauchleitung angeschlossen werden sollte.

Nach einer andersartigen Ausgestaltung kann der Sensor auch als Meßwertgeber ausgebildet werden, dessen Steuersignale dem jeweiligen Unterdruck in der Schlauchleitung proportional sind, wobei das Fördervolumen der Förderpumpe in Abhängigkeit von den abgegebenen Steuersignalen des Meßwertgebers z.B. durch Drehzahlregelungen stufenlos verändert werden kann.

Durch die gemäß der Erfindung in die Schlauchleitung eingesetzte, in ihrer Förderleistung in Abhängigkeit von dem in dieser herrschenden Unterdruck steuerbaren Förderpumpe ist es möglich, den Strömungswiderstand einer Schlauchleitung auszugleichen, so daß von den Tieren an der Saugstelle nur eine geringe und stets nahezu gleichbleibende Saugleistung zu erbringen ist. Bei derartigen Einrichtungen können somit Schlauchleitungen großer Länge verwendet werden, der Vorratsbehälter bzw. der Tränkeautomat zur Aufbereitung des Futtermittels kann demnach ohne Rücksicht auf die Lage der Saugstelle an einem günstigen Ort plaziert werden. Die Tiere können somit auch eine große Futtermittelmenge in kurzer Zeit aufnehmen, ohne zu ermüden. Dadurch wird des weiteren die Kapazität einer Einrichtung optimal ausgenutzt, da die Tiere schneller als bisher das Futtermittel einer Saugstelle entnehmen können und demnach mit einer Einrichtung eine weitaus größere Anzahl von Tieren als bisher gut zu versorgen ist.

Ferner ist von Vorteil, daß die Förderpumpe ohne Schwierigkeiten auch in bestehende Anlagen eingebaut und diese demnach nachgerüstet werden können. Und da mittels der Förderpumpe eine Schlauchleitung leicht entleert und mit einem Reinigungsmittel durchgespült werden kann, ohne daß diese von der Saugstelle abgenommen werden muß, wird, zumal vor Inbetriebnahme erwärmtes Futtermittel in die Schlauchleitung gepumpt werden kann, auch die Handhabung in einem erheblichen Maße erleichtert.

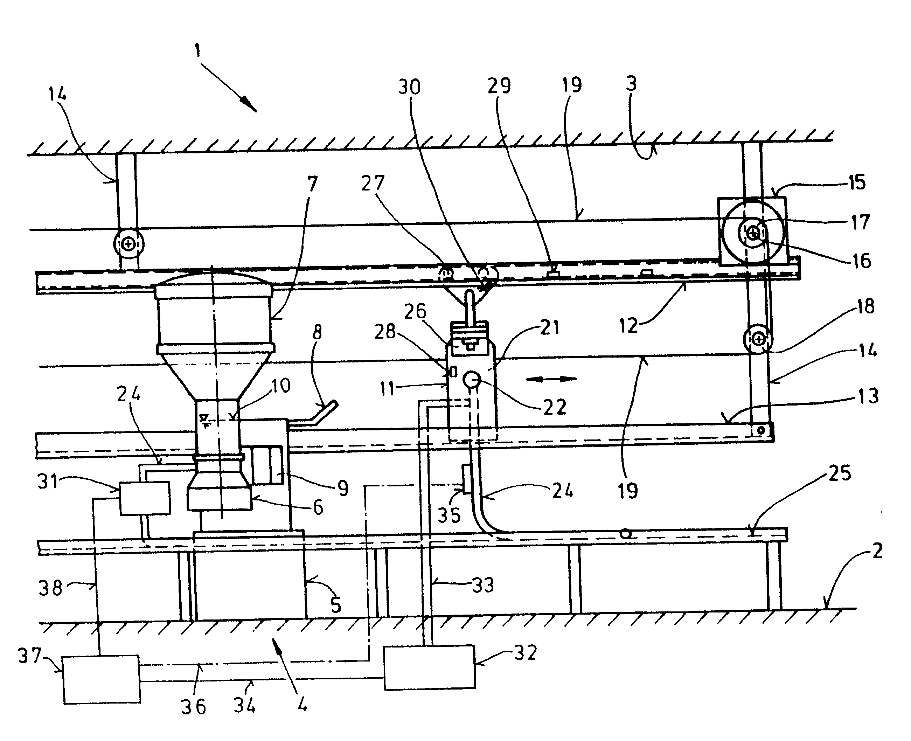

In der Zeichnung ist eine gemäß der Erfindung ausgebildete Einrichtung zur Versorgung von Tieren dargestellt und nachfolgend im Einzelnen erläutert.

Die mit 1 bezeichnete Einrichtung dient zur gesteuerten Versorgung von einer großen Anzahl von Tieren, insbesondere Jungtieren, mit einem flüssigen Futtermittel und besteht im wesentlichen aus einem ortsfesten Tränkeautomaten 4 und einer Saugstelle 11, die gegenüber diesem seitlich verstellbar angeordnet ist. Das in einem Mixer 6, der auf einem auf dem Stallboden 2 stehenden Geäuse 5 gehalten ist, aus einem Vorratsbehältnis 7 zugeführte Trockenpulver und Wasser, das über eine Leitung 8 zuströmt, aufbereitete Futtermittel steht den Tieren an der Saugstelle 11 zur Verfügung.

Die verfahrbare Saugstelle 11 ist bei dem gezeigten Ausführungsbeispiel aus einer Platte 21 und einem in dieser eingesetzten Nuckel 22 gebildet, der über eine elastisch verformbare Schlauchleitung 24, die auf einer unterhalb des unteren Flüssigkeitsniveaus des Mixers 6 angeordneten trogförmig ausgebildeten Auflage 25 abgestützt ist, an den Mixer 6 angeschlossen ist. Die Platte 21 ist hierbei verschiebbar in einer oberen Führungsschiene 13 gehalten, die mittels Streben 14 an der Stalldecke 3 aufgehängt und U-förmig ausgebildet sind. Um die zu überwindenden Reibungskräfte gering zu halten, ist die Platte 21 über ein Gabelstück 26 und an diesem angebrachten Rollen 27 abgestützt, die sich an der oberen Führungsschiene 12 abwälzen. Zum Antrieb der Saugstelle 11 dient ein umlaufendes Zugseil 19, das über Rollen 18 geführt ist und durch einen Motor 15 angetrieben wird, auf dessen Abtriebswelle 16 eine Antriebsrolle 17 angeordnet ist. Wird der Motor 15 als Stellmotor ausgebildet und werden z.B. an der oberen Führungsschiene 12 Steuermarken 29 angebracht, so kann die mit einem Annäherungsschalter 30 ausgestattete Saugstelle 11 schrittweise verfahren werden. Des weiteren kann an der Platte 21 eine Identifizierungseinheit 28 vorgesehen werden, mittels der den einzelnen mit einer Kennmarke ausgestatteten Tieren im Zusammenwirken mit einem dem Tränkeautomaten 4 zugeordneten Programmschaltwerk 9 eine bestimmte Futtermittelmenge zugeteilt werden kann.

Da die die Saugstelle 11 mit dem Mixer 6 des Tränkeautomaten 4 verbindende Schlauchleitung 24 groß bemessen sein muß, ist in diese eine Förderpumpe 31 z.B. nach Art einer regelbaren Flügelzellenpumpe eingesetzt. Die von den Tieren an der Saugstelle 11 aufzubringende Saugleistung kann somit äußerst gering gehalten werden, so daß auch Jungtiere stets in einem ausreichenden Maße mit Futtermittel versorgt werden und beim Tränkevorgang nicht ermüden.

Um die Fördermenge der Pumpe 31 einstellen und den jeweiligen Erfordernissen anpassen zu können, ist in die Saugleitung 24 nahe der Saugstelle 11 und in einem über dem oberen Flüssigkeitsniveau 10 des Mixers 6 liegenden Bereich mittels einer Leitung 33 ein als Unterdruckschalter ausgebildeter Sensor 32 angeschlossen, dessen Steuersignale über eine Signalleitung 34 einem Steuergerät 37 zuführbar sind, das über eine Steuerleitung 38 mit der Förderpumpe 31 in Verbindung steht.

Bei einem in der Schlauchleitung 24 auftretenden Unterdruck wird somit die Förderpumpe 31 für eine bestimmte Zeiteinheit oder solange das in Abhängigkeit von dem Unterdruck erzeugte Signal ansteht eingeschaltet. Einem an der Saugstelle 11 Futtermittel aufnehmenden Tier wird mit Hilfe der Förderpumpe 31 das Futtermittel somit zugeführt, die aufzubringende Saugleistung ist demnach gering. Und um zu vermeiden, daß zu Beginn eines Fütterungsvorganges den Tieren eine zu große Menge an Futtermittel zur Verfügung steht, kann mit Hilfe des Steuergerätes 37 die Förderpumpe 31 taktweise angetrieben werden. Beispielsweise kann während einer Zeitspanne von zwei Sekunden das Fördervolumen der Förderpumpe 31 stufenweise bis zur vollen Leistung erhöht werden, indem diese derart gesteuert wird, daß in der ersten Sekunde nur ein Drittel und in der zweiten Sekunde zwei Drittel der möglichen Fördermenge an die Saugstelle 11 gepumpt und erst zu Beginn der dritten Sekunde, solange Futtermittel der Schlauchleitung 24 entnommen wird und in dieser demnach ein Unterdruck herrscht, die volle Förderleistung erbracht werden.

Es ist aber auch möglich, die Fördermenge der Pumpe 31 in Abhängigkeit von dem in der Saugleitung 24 herrschenden Unterdruck stufenlos zu verändern. Dies kann, wie dies strichpunktiert eingezeichnet ist, mit Hilfe eines als Meßwertgeber ausgebildeten in die Schlauchleitung 24 eingesetzten Sensors 35 bewerkstelligt werden, der über eine Signalleitung 36 an das Steuergerät 37 angeschlossen ist. In Abhängigkeit von den aufgenommenen Signalen kann somit mit Hilfe des Steuergerätes 37 z.B. eine Drehzahlregelung der Förderpumpe 31 vorgenommen werden, um deren Förderleistung an der der Saugstelle 11 jeweils entnommenen Futtermittelmenge, die dem Unterdruck in der Saugleitung 24 proportional ist, sofort anzupassen.

## Ansprüche

1. Einrichtung zur Versorgung (1) von Kälbern, Rindern oder ähnlichen Haustieren, insbesondere Jungtieren, mit einem flüssigen Futtermittel, das einem Vorratsbehältnis (7), vorzugsweise einem Tränkeautomaten (4) entnehmbar und über eine Schlauchleitung (24) einer Saugstelle (11) zuführbar ist,

**dadurch gekennzeichnet,** daß in die Schlauchleitung (24) eine Förderpumpe (31) für das Futtermittel eingesetzt ist, deren Förderleistung in Abhängigkeit von dem in der Schlauchleitung (24) herrschenden Unterdruck steuerbar ist.

2. Einrichtung nach Anspruch 1,

**dadurch gekennzeichnet,** daß zur Steuerung der Förderpumpe (31) ein durch Unterdruck beeinflußbarer Sensor (32 ; 35) vorgesehen ist, der in die Schlauchleitung (24) eingesetzt oder an diese angeschlossen ist und der zur Auswertung der Steuersignale mit einem der Förderpumpe (31) zugeordneten Steuergerät (37) in Verbindung steht.

3. Einrichtung nach Anspruch 1 oder 2,

**dadurch gekennzeichnet,** daß der Sensor (32) als Unterdruckschalter ausgebildet ist, in Abhängigkeit von dessen Steuersignalen die Förderpumpe (31) ein- und ausschaltbar ist.

4. Einrichtung nach einem oder mehreren der Ansprüche 1 bis 3,

**dadurch gekennzeichnet,** daß die Förderpumpe (31) mit Hilfe des Steuergerätes (37) zu Beginn eines Fütterungsvorganges taktweise antreibbar und derart steuerbar ist, daß deren Fördervolumen während einer einstellbaren Zeiteinheit in wählbaren Stufen veränderbar ist.

5. Einrichtung nach Anspruch 3 oder 4,

**dadurch gekennzeichnet,** daß der Druckschalter (32) nahe der Saugstelle (11) an die Schlauchleitung (24) angeschlossen ist.

6. Einrichtung nach einem oder mehreren der Ansprüche 3 bis 5,

**dadurch gekennzeichnet,** daß der Druckschalter (32) in einem über dem oberen Flüssigkeitsniveau (10) des Vorratsbehältnisses, bei einem zur Versorgung vorgesehenen Tränkeautomaten (4) über dem oberen Flüssigkeitsniveau (10) des Mixers (6), verlaufendem Bereich der Schlauchleitung (24) an diese angeschlossen ist.

7. Einrichtung nach Anspruch 1 oder 2,

**dadurch gekennzeichnet,** daß der Sensor (35) als Meßwertgeber ausgebildet ist, dessen Steuersignale dem jeweiligen Unterdruck in der Schlauchleitung (4) proportional sind.

8. Einrichtung nach Anspruch 7,

**dadurch gekennzeichnet,** daß das Fördervolumen der Förderpumpe (31) in Abhängigkeit von den abgegebenen Steuersignalen des Meßwertgebers (35) z.B. durch Drehzahlregelungen stufenlos veränderbar ist.

## Claims

1. Device (1) for supplying calves, cattle or similar domestic animals, in particular young animals, with a liquid feeding medium which can be withdrawn from a reservoir (7), preferably in the form of an automatic dispensing device (4) and supplied to a feeding point (11) via a suction pipe (24),

**characterized in that** a feed pump (31) is installed in the suction pipe (24) for extraction of the feedstuff whose displacement can be controlled proportional to the prevailing negative pressure in the suction pipe (24).

2. Device as claimed in claim 1,

**characterized in that** a sensor (32 ; 35) regulated by negative pressure is fitted in or connected to the suction pipe (24) to control the feed pump (31), being connected to a control unit (37) attached to the feed pump (31) to evaluate the control signals.

3. Device as claimed in claim 1 or 2,

**characterized in that** the sensor (32) is arranged as a negative pressure switch which can respond to control signals from the feed pump (31) to switch the latter on and off.

4. Device as claimed in one or more of claims 1 to 3,

**characterized in that** the feed pump (31) can be driven in cycles with the help of the control unit (37) at the start of a feeding sequence and can be controlled in such a way that its displacement can be varied in a choice of settings within a preselectable time period.

5. Device as claimed in claim 3 or 4,

**characterized in that** the pressure switch (32) is connected to the suction pipe (24) near the feeding point (11).

6. Device as claimed in one or more of claims 3 to 5,

**characterized in that** the pressure switch (32) is connected to a section of the suction pipe (24) located above the maximum fluid level (10) in the reservoir (7) or, in the case of an automatic dispensing device, alive the maximum fluid level (10) in the mixer (6).

7. Device as claimed in claim 1 or 2,

**characterized in that** the sensor (35) is arranged as a transducer whose control signals are proportional to the prevailing negative pressure in the suction pipe (24).

8. Device as claimed in claim 7,

**characterized in that** the displacement of the feed pump (31) can be infinitely varied in accordance with control signals emitted by the transducer (35), e.g. by varying the rotational speed.

## Revendications

1. Dispositif (1) pour alimenter des veaux, des bovins ou des animaux domestiques semblables, en particulier des bêtes jeunes avec un aliment liquide qui est prélevé d'un réservoir (7), de préférence un distributeur de boissons (4), et refoulé par l'intermédiaire d'un tuyau flexible (24) vers le point d'aspiration (11),
se caractérisant par le fait qu'il est prévu, dans le tuyau flexible (24), une pompe de refoulement (31) pour l'aliment dont le débit est réglé en fonction de la dépression règnant dans le tuyau flexible (24).

2. Dispositif d'après la revendication 1,
se caractérisant par le fait que pour la commande de la pompe de refoulement (31), il est prévu un capteur (32 ; 35) réagissant à la dépression, qui est disposé dans le tuyau flexible ou branché sur celui-ci et qui, pour l'évaluation des signaux de commande, est raccordé à une unité de commande (37) attribuée à la pompe de refoulement (31).

3. Dispositif d'après les revendications 1 ou 2,
se caractérisant par le fait que le capteur (32) est un contacteur de dépression dont les signaux de commande provoquent l'activation et la désactivation de la pompe de refoulement (31).

4. Dispositif d'après une ou plusieurs des revendications 1 à 3,
se caractérisant par le fait que au début du processus d'alimentation, l'unité de commande (37) assure l'entraînement cyclé de la pompe de refoulement (31) et la commande de sorte que pendant une certaine periode variable, le volume refoulé se laisse régler par échelons.

5. Dispositif d'après les revendications 3 ou 4,
se caractérisant par le fait que le contacteur de dépression (32) est branché à proximité du point d'aspiration (11) sur le tuyau flexible (24).

6. Dispositif d'après une ou plusieurs des revendications 3 à 5,
se caractérisant par le fait que le contacteur de dépression (32) est branché sur une section du tuyau flexible (24) se trouvant au-dessus du niveau de liquide supérieur (10) du réservoir ou, dans le cas d'un distributeur de boissons (4), au-dessus du niveau de liquide supérieur (10) du mixeur (6).

7. Dispositif d'après la revendication 1 ou 2,
se caractérisant par le fait que le capteur (35) est un transmetteur de valeur mesurée dont les signaux de commande sont proportionnels à la dépression respective dans le tuyau flexible (4).

8. Dispositif d'après la revendication 7,
se caractérisant par le fait que en fonction des signaux de commande donnés par le transmetteur (35), le débit de la pompe de refoulement (31) se laisse régler continuellement, par exemple par des variations de vitesse.